# EUROPÄISCHE PATENTSCHRIFT

(11) **EP 1 805 258 B1**
(45) Veröffentlichungstag und Bekanntmachung des Hinweises auf die Patenterteilung: **02.02.2011**
(21) Anmeldenummer: 05798091.4
(22) Anmeldetag: 13.10.2005
(51) Int. Cl.: C08L 45/00

(54) **POLYMERBLENDS ZUR HERSTELLUNG VON FOLIEN MIT REDUZIERTER DEFEKTZAHL**
POLYMER BLENDS FOR PRODUCING FILMS WITH A REDUCED NUMBER OF DEFECTS
MELANGES POLYMERES POUR REALISER DES FEUILLES A NOMBRE DE DEFAUTS REDUIT

(30) Priorität: 18.10.2004 DE 102004050659
(43) Veröffentlichungstag der Anmeldung: 11.07.2007
(73) Patentinhaber: Topas Advanced Polymers GmbH, 65926 Frankfurt am Main (DE)
(72) Erfinder: GOERLITZ, Wolfram, 65193 Wiesbaden (DE); SCHAUWIENHOLD, Anne-Meike, 64653 Lorsch (DE)
(74) Vertreter: Ackermann, Joachim
(86) Internationale Anmeldenummer: PCT/EP2005/010981
(87) Internationale Veröffentlichungsnummer: WO 2006/042681

(56) Entgegenhaltungen:
- EP-A- 0 384 694
- EP-A- 0 965 614
- WO-A-03/095200
- DE-A1- 4 213 219
- US-A- 5 439 973

## Beschreibung

### Gebiet der Erfindung

Die Erfindung betrifft ausgewählte Polymerblends, die zur Herstellung von Folien mit reduzierter Defektzahl eingesetzt werden können, sowie ein Verfahren zur Herstellung der Polymerblends. Weiterhin wird die Verwendung der erfindungsgemäßen Polymerblends zur Herstellung von Folien beansprucht.

### Stand der Technik

Folien und Formkörper aus Cycloolefincopolymeren (COC) zeichnen sich durch eine niedrige Dichte, hohe Transparenz, geringe Doppelbrechung, eine außerordentlich geringe Wasseraufnahme und eine hohe Steifheit, Festigkeit und Härte aus.

Die Verarbeitung von COC auf industrieüblichen Extrusionsanlagen zu Folien bzw. Filmen, z.B auf Nutbuchsen-Extrudern oder Glatt-Rohr-Extrudern, führt häufig zu einer erhöhten Anzahl von Fehlstellen z.B. sogenannten "Gels/Fish-Eyes" in der Folie. Durch die erhöhten Defektzahlen wird die Verwendbarkeit des Materials für bestimmte industrielle Anwendungen eingeschränkt. Andere Polymere, die sich vielleicht mit geringeren Defektzahlen zu Folien verarbeiten lassen, weisen jedoch nicht die hervorragenden Eigenschaften, insbesondere die hohe Steifheit der Cycloolefincopolymere auf. Es bestand also ein Bedarf möglichst defektfreie Folien oder auch Formkörper mit den Eigenschaften der Cycloolefincopolymere herzustellen.

Im Sinne dieser Anmeldung ist unter dem Begriff Folie auch Film bzw. Sheet zu verstehen.

In der EP 384 694 A wird die Herstellung von Filmen aus Blends von COC und anderen Polymeren z.B. Polyolefinen beschrieben. Allgemein weisen die so erhaltenen Filme gute Oberflächeneigenschaften auf, wobei die einzelnen Eigenschaften jedoch nicht weiter beschrieben werden. Auch gibt das Dokument keinen Hinweis auf die Reduzierung der Defektzahlen bei der Herstellung von Filmen.

Aufgabe der vorliegenden Erfindung war es, Polymere bereitzustellen, durch die es möglich ist, Folien oder Formkörper mit reduzierter Defektzahl herzustellen.

Die Aufgabe wurde durch die Bereitstellung des erfindungsgemäßen Polymerblends gelöst.

Es wurde gefunden, dass sich die Verarbeitbarkeit von COC durch Zugabe ausgewählter Mengen von Polyethylen (PE) deutlich verbessern lässt. Eine weitere deutliche Verbesserung ergibt sich durch die Herstellweise der Polymerblends.

Bisher werden die Polymerblends beispielsweise durch Mischen von COC-Granulaten und PE-Granulaten in der so genannten "Salz und Pfeffer" Methode hergestellt. Die aus diesem Blend hergestellten Folien weisen jedoch hohe Defektzahlen auf.

Es wurde nun gefunden, dass sich durch Compoundierung von PE und COC in der Schmelze bzw. durch Mischen von PE- und COC-Lösungen, die erfindungsgemäßen Polymerblends mit zusätzlich verbesserten Defektzahlen herstellen lassen.

### Beschreibung der Erfindung

Gegenstand der Erfindung ist demzufolge ein Polymerblend, enthaltend COC und 1 bis 10 Gew.% PE - bezogen auf die Masse des Polymerblends.

### Cycloolefincopolymer COC

Die erfindungsgemäßen Polymerblends enthalten COC, welches im allgemeinen 0,1 bis 100,0 Gew.- %, vorzugsweise 0,1 bis 99,9 Gew.-%, bezogen auf die Gesamtmasse des Cycloolefincopolymers, polymerisierte Einheiten enthält, welche sich ableiten von mindestens einem polycyclischen Olefin der nachfolgenden Formeln I, II, II', III, IV, V oder VI 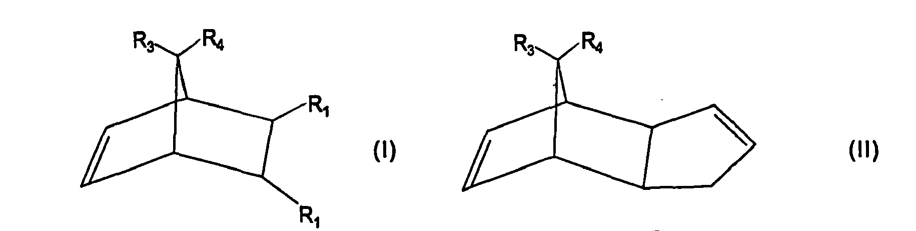 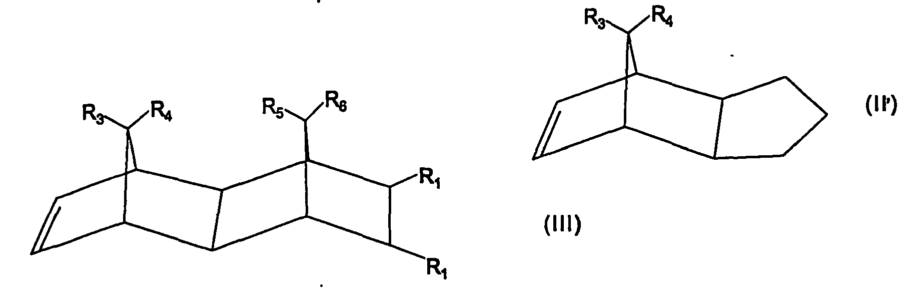 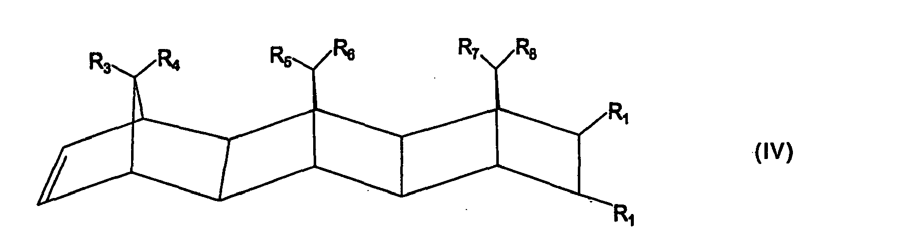 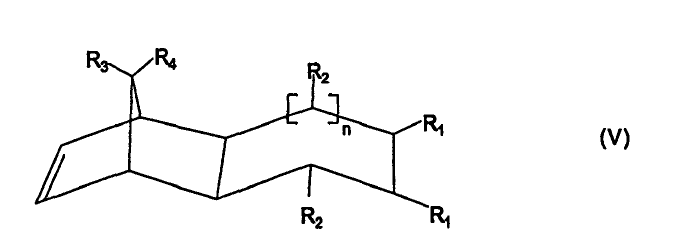 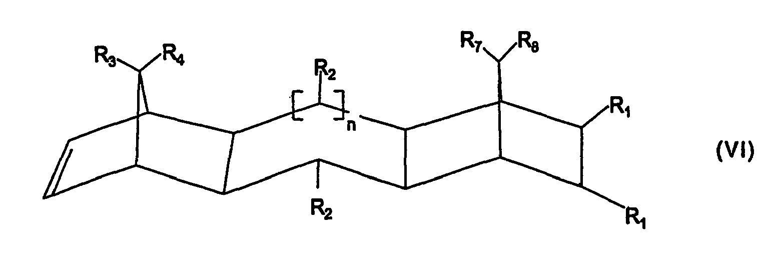 worin R¹, R², R³, R⁴, R⁵, R⁶, R⁷ und R⁸ gleich oder verschieden sind und ein Wasserstoffatom
oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann,
und
0 bis 99,9 Gew.-%, vorzugsweise 0,1 bis 99,9 Gew.-%, insbesondere 0,5 bis 80 Gew.-%, bezogen auf die Gesamtmasse des Cycloolefincopolymers, polymerisierte Einheiten, welche sich ableiten von einem oder mehreren acyclischen Olefinen der Formel VII 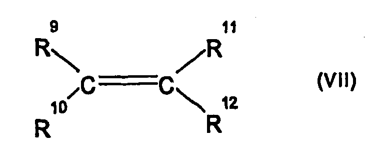 worin R⁹_{,} R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

In einer bevorzugten Ausführungsform können die verwendeten Cycloolefincopolymere 0 bis 45 Gew.-%, vorzugsweise 0,1 bis 40 Gew.-% bezogen auf die Gesamtmasse des Cycloolefincopolymers, polymerisierte Einheiten enthalten, welche sich ableiten von einem oder mehreren monocyclischen Olefinen der Formel VIII 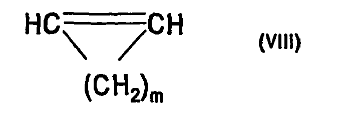 worin m eine Zahl von 2 bis 10 ist.

Bei den cyclischen Olefinen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen, eingeschlossen.

Bevorzugt im Sinne der Erfindung sind COC's, die polymerisierte Einheiten enthalten, welche sich ableiten von polycyclischen Olefinen der Formeln I oder III, und polymerisierte Einheiten, welche sich ableiten von acyclischen Olefinen der Formel VII, insbesondere Olefine mit Norbornengrundstruktur wie Norbornen und Tetracyclododecen und gegebenenfalls Vinylnorbornen oder Norbornadien.

Bevorzugt sind auch Cycloolefincopolymere mit polymerisierten Einheiten, abgeleitet von acyclischen Olefinen mit endständigen Doppelbindungen wie α-Olefine mit 2 bis 20 C-Atomen, insbesondere Ethylen oder Propylen, beispielsweise EthylenlNorbornen- und Ethylen/Tetracyclododecen-Copolymere.

Als Terpolymere sind bevorzugt Ethylen/Norbornen/Vinylnorbonen-, Ethylen/ Norbornen/Norbornadien-, Ethylen/Tetracyclododecen/Vinylnorbornen-, Ethylen/Tetracyclododecen/Vinyltetracyclododecen- oder Ethylen/Norbornen/Dicyclopentadien-Terpolymere.

Ganz besonders vorteilhaft ist als COC ein Copolymer aus Ethylen und Norbornen einsetzbar.

Verfahren zur Herstellung der Cycloolefincopolymere

Die Cycloolefincopolymere können in bekannter Weise hergestellt werden bei Temperaturen von -78 bis 200 °C und einem Druck von 0,01 bis 200 bar, in Gegenwart eines oder mehrerer Katalysatorsysteme, die mindestens eine Übergangsmetallverbindung und gegebenenfalls einen Cokatalysator und gegebenenfalls ein Trägermaterial enthalten.

Als Übergangsmetallverbindungen eignen sich Metallocene, insbesondere stereorigide Metallocene. Beispiele für Katalysatorsysteme, die für die Herstellung der COCs geeignet sind, sind z.B. beschrieben in US-A-5,008,356, EP-A-0 407 870, EP-A-0 485 893 und EP-A-0 503 422.

Die Herstellung der Cycloolefincopolymere kann auch auf anderen, nachfolgend kurz skizzierten Wegen erfolgen:
Katalysatorsysteme, basierend auf Mischkatalysatoren aus Titansalzen und Aluminiumorganylen, werden in DD-A-109 224 und DD-A-237 070 beschrieben. EP-A-0156 464 beschreibt die Herstellung mit Katalysatoren auf Vanadiumbasis.

Die Cycloolefincopolymere können auch durch ringöffnende Polymerisation mindestens eines der Monomere mit den Formeln I bis VI und anschließender Hydrierung der erhaltenen Produkte erhalten werden.

Die Polymerisation kann auch mehrstufig erfolgen, wobei auch Blockcopolymere entstehen können, siehe dazu DE-A-42 05 416.

Die Wärmeformbeständigkeiten der Cycloolefincopolymere lassen sich in einem weiten Bereich einstellen.

Als Anhaltspunkt für die Wärmeformbeständigkeit, wie sie nach ISO 75 Teil 1 und Teil 2 an Spritzgußformkörpern bestimmt werden kann, lässt sich für Cycloolefincopolymere die Glasübergangstemperatur T_{g} heranziehen, gemessen nach DIN EN ISO 11357-1 mit Hilfe einer DSC bei einer Aufheizgeschwindigkeit von 20 K/min.

Die beschriebenen Cycloolefincopolymere weisen Glasübergangstemperaturen im Bereich von 25 bis 200 °C, vorzugsweise von 60 bis 190 °C, insbesondere von 65 bis 145°C auf. Die erfindungsgemäßen Polymerblends können auch ggf. Mischungen von verschiedenen COC's mit unterschiedlichen Glasübergangstemperaturen enthalten.

Die Dichte der Cycloolefincopolymere, die in der vorliegenden Erfindung eingesetzt werden, liegt üblicherweise im Bereich von 0,9 bis 1,1 g/cm³, vorzugsweise 0,9 bis 1,05 g/cm³.

Die beschriebenen Cycloolefincopolymere besitzen gemäß DIN 53 728 Viskositätszahlen VZ im Bereich von 5 bis 5000 ml/g, vorzugsweise von 5 bis 2000 ml/g und insbesondere von 5 bis 1000 ml/g.

### Polyethylen PE

Im erfindungsgemäßen Polymerblend ist weiterhin Polyethylen PE enthalten. Polyethylen ist ein teilkristalliner Thermoplast, dessen Eigenschaften in großem Maße vom Polymerisationsverfahren abhängen (Saechtling, Kunststoff-Taschenbuch, 27. Ausgabe).

LDPE wird unter hohem Druck und mit radikalischer Initiierung hergestellt, wobei ein stark verzweigtes PE mit unterschiedlich langen und in sich verzweigten Seitenketten entsteht. LDPE besitzt üblicherweise Dichten von 0,915 bis 0,935 g/cm³.

HDPE wird mit Metallkomplex-Katalysatoren bei niedrigen (Ziegler-Katalysatoren) oder mittleren Drücken (Phillips-Katalysatoren) hergestellt. Es entsteht ein nur sehr wenig verzweigtes, weitgehend lineares Polyethylen; ein typischer Wert sind 5 Kurz-Verzweigungen. Daraus resultiert eine hohe Kristallinität und hohe Dichte von üblicherweise 0,942 bis 0,965 g/cm³.

LLDPE wird durch Copolymerisation von Ethen mit α-Olefinen durch Metallkomplex-Katalysatoren bei niedrigen Drücken hergestellt. Die einpolymerisierten α-Olefine bilden kurze Seitenketten aus, die die Kristallinität und somit die Dichte absenken. Je nachdem, welches α-Olefin verwendet wird und wie hoch sein Gehalt im LLDPE ist, kann für LLDPE eine Dichte zwischen derjenigen von HDPE bis zu sehr niedrigen Dichten von 0,865 g/cm³ eingestellt werden.

Polyethylene mit sehr niedrigen Dichten werden auch als VLDPE (very low density) oder ULDPE (ultra low density) bezeichnet.

Mit speziellen Metallkomplex-Katalysatoren, den Metallocenen, lassen sich LLDPE's mit besonderen Eigenschaften herstellen, z.B. hoher Zähigkeit und Durchstoßfestigkeit. Sie werden als mLLDPE's bezeichnet. Der Dichtebereich von mLLDPE ist ähnlich variabel wie der Dichtebereich von LLDPE, Typen mit extrem niedrigen Dichten werden auch als Plastomere bezeichnet.

Von allen Polyethylen-Typen gibt es kommerzielle Typen mit sehr unterschiedlichen Fließfähigkeiten. Das Molekulargewicht kann durch Steuerung der Kettenabbruchreaktion soweit erniedrigt werden, daß Wachse entstehen. HDPE-Typen mit sehr hohen Molekulargewichten werden als HMWPE und UHMWPE bezeichnet.

In einer bevorzugten Ausführungsform der Erfindung enthalten die Polymerblends COC und als Polyethylen LLDPE, vorzugsweise mLLDPE.

Vorzugsweise wird LLDPE, insbesondere mLLDPE, mit einer Dichte von 0,905 bis 0,930 g/cm³ eingesetzt.

Die erfindungsgemäßen Polymerblends enthalten bevorzugt 2 bis 8, insbesondere 2,5 bis 5 Gew.-% Polyethylen - bezogen auf die Masse des Polymerblends.

Weiterhin bevorzugt sind die erfindungsgemäßen Polymerblends, die dadurch gekennzeichnet sind, dass sie durch Mischen in Lösung oder durch Compoundierung in der Schmelze hergestellt wurden.

Bevorzugt sind ebenfalls Polymerblends, die durch Mischen von COC und mLLDPE in Lösung hergestellt werden.

### Verfahren zur Herstellung der Polymerblends

Ein weiterer Gegenstand der Erfindung ist ein Verfahren zur Herstellung der erfindungsgemäßen Polymerblends, dadurch gekennzeichnet, dass die Polymerblends durch Compoundierung in der Schmelze oder durch Mischen in Lösung hergestellt werden.

Besonders bevorzugt ist hierbei die Herstellung durch Compoundierung in der Schmelze.

In einer weiteren besonders bevorzugten Ausführungsform wird die Herstellung der erfindungsgemäßen Polymerblends durch Mischen in Lösung beansprucht.

Polymerblends können allgemein auf verschiedene Art und Weise hergestellt werden.

### Salz und Pfeffer-Blends

Durch einfaches Mischen von Granulaten werden so genannte Salz- und Pfeffer-Blend hergestellt.

### Compoundierung in der Schmelze

Eine feinere Durchmischung der Phasen von unmischbaren Blends wird erreicht, wenn die einzelnen Komponenten gemeinsam aufgeschmolzen und durchmischt werden. Ein solcher Blend wird als Compound bezeichnet. Typischerweise werden für die Compoundierung

Zweischneckenextruder verwendet, es ist jedoch auch die Verwendung von Knetern möglich.

Vorzugsweise kann das Polyethylen während des Herstellungsprozesse des COC's direkt in der Produktionsanlage zugesetzt werden (internes Compoundieren in der Schmelze).

Dabei wird das PE der COC-Schmelze, die nach dem Abziehen des Reaktionslösungsmittels zurückbleibt, zugesetzt. Der Zusatz des PE erfolgt beispielsweise über einen Seitenstromextruder oder ein Co-Kneter, in dem das Polyethylen aufgeschmolzen wird. Die Dosierung in den COC-Schmelzestrom kann über eine Schmelzepumpe erfolgen. Zur Durchmischung der Schmelzen können Mischelemente wie statische Mischer verwendet werden.

Die Polymerblends werden anschließend in üblicher Weise granuliert, z.B. durch Stranggranulation, Unterwasser-Ringgranulation, Heißabschlag oder zu Pellets vertropft.

### Mischen in Lösung

Weiterhin können Polymerblends durch Auflösen der einzelnen Blendkomponenten, Vermischen der Lösungen und Entfernung des Lösungsmittels hergestellt werden. Das Entfernen des Lösungsmittels kann dabei durch Verdampfen des Lösungsmittels, beispielsweise bei erhöhter Temperatur und/oder erniedrigtem Druck geschehen.

Alternativ kann das Entfernen des Lösungsmittels durch Einbringen der Blendlösung in ein Fällungsmittel und Filtration des ausgefallenen Polymerblends geschehen. Das ausgefallene Material kann anschließend einem Pelletierschritt unterworfen werden oder als Pulver direkt verwendet werden.

In einer weiteren, bevorzugten Ausführungsform kann die PE-Lösung während des COC-Herstellungprozesses zugesetzt werden - die Mischung in der Lösung erfolgt also direkt in der Produktionsanlage (internes Mischen in Lösung).

Der Zusatz der PE-Lösung kann direkt in den Polymerisationsreaktor erfolgen, bevorzugt jedoch nach Abschluss der Copolymerisationsreaktion vor Abtrennung des Lösungsmittels.

Dazu kann das PE unter geeigneten Bedingungen in einem Rührkessel aufgelöst werden und über eine Pumpe der COC-Lösung zugesetzt werden. Die Vermischung der beiden Lösungen kann in einem Rührbehälter oder in durchströmten Rohrleitungen erfolgen. Die Abtrennung des Lösungsmittels erfolgt anschließend durch Verdampfen des Lösungsmittels, beispielsweise bei erhöhter Temperatur und/oder erniedrigtem Druck. Die Schmelze wird anschließend zu einem Strang gegossen und in üblicher Weise granuliert, z.B. durch Stranggranulation, Unterwasser-Ringgranulation, Heißabschlag oder zu Pellets vertropft.

Geeignete Lösungsmittel zur Herstellung der PE-Lösung sind beispielsweise hochsiedende Aliphaten, es sind aber auch andere Lösungsmittel möglich. Die Herstellung der Polyethylenlösung erfolgt zwischen 50 und 200°C, bevorzugt zwischen 90 und 200°C. Die Konzentration der Polyethylenlösung liegt zwischen 1 und 25 %, bevorzugt zwischen 5 und 25 %, besonders bevorzugt zwischen 10 und 20%. Die Reinheit der Lösungen kann durch Verwendung von geeigneten Filtern erhöht werden.

Unabhängig davon, ob der Blend in dem erfindungsgemäßen Verfahren in Lösung oder in der Schmelze hergestellt wurde, kann die Reinheit der Schmelze durch eine Schmelzefiltration z. B. über Tiefenfilter erhöht werden.

### Spraycoating

Als weitere Ausführungsform wird ein Verfahren zur Herstellung der Polymerblends beansprucht, bei dem die Polymerblend-Granulate oder Pellets durch Spraycoating mit einer Wachsschicht überzogen werden.

Die vorgetrockneten Pellets oder Granulate fallen in einen Sammelbehälter und werden dabei mit einer Wachsdispersion, die aus Düsen tritt, besprüht. Die Düsen sind dabei ringförmig angeordnet, so dass der Pellet- oder Granulatstrom gleichmäßig erfasst wird. Die Trocknung erfolgt anschließend im trocknen Luftstrom, so dass Restfeuchten von unter 200 ppm erreicht werden. Zur Verdüsung werden Zweistoffdüsen mit Luft eingesetzt.

Die Wachsdispersion besteht aus festen Wachspartikeln (z.B. Ethylenbisstearamid oder Pentaerythrit-tetrastearat) mit einem durchschnittlichen Durchmesser von unter 30 µm, die in einer wässrigen Matrix durch Zusatz von oberflächenaktiven Substanzen stabilisiert werden. Der Gehalt an festen Wachspartikeln in der Dispersion beträgt von 5 bis 50%, bevorzugt 10 bis 40%. Der Wachsgehalt auf den Pellets oder Granulaten beträgt 200 bis 3000 ppm, bevorzugt 1000 bis 1500 ppm.

Vorzugsweise wird das Wachs ausgewählt aus der Gruppe, die gebildet wird von Ethylenbisstearamid und Pentaerythrit-tetrastearat.

Durch das Spraycoaten erhalten die Pellets oder Granulate eine gleichmäßige und gut anhaftende Wachsbeschichtung, die für die Lagerung, Transport und Weiterverarbeitung vorteilhaft ist.

### Folien

Die erfindungsgemäßen Polymerblends können für die Herstellung von Mono- oder Mehrschichtfolien eingesetzt werden.

Ein weiterer Gegenstand der Erfindung sind daher Mono- oder Mehrschichtfolien, die die erfindungsgemäßen Polymerblends enthalten.

Durch den Einsatz der erfindungsgemäßen Polymerblends bei der Herstellung von Folien kann deren Defektzahl um mindestens 70 %, vorzugsweise mindestens 80%, insbesondere mindestens 90 % reduziert werden. Die Prozentzahlen ergeben sich durch den Vergleich von Defektzahlmessungen an einer Folien aus COC ohne PE (z.B. Vergleichsversuch 1) und Folien, hergestellt aus den erfindungsgemäßen Polymerblends.

Die Folien gemäß der Erfindung weisen im allgemeinen eine Dicke im Bereich von 5 bis 1000 µm auf, vorzugsweise von 10 bis 600 µm, besonders bevorzugt von 15 bis 300 µm. Sie können dabei als Monofolie vorliegen oder als Mehrschichtfolie.

Die Folien können zu Folien im Mehrschichtenverbund kombiniert wird. Der Verbund kann durch Laminieren von vorher einzeln für sich hergestellten Filme, durch Coextrusion oder durch Extrusionsbeschichtung bzw. Extrusionskaschierung hergestellt werden.

Zusätzlich können zwischen den einzelnen Schichten weitere, die Haftung verbessernde Schichten vorgesehen sein. Die hierfür eingesetzten Substanzen können mindestens ein oder mehrere Polymere enthalten und sind als solche allgemein bekannt. Auch kann der bei dem Fertigungsprozess anfallende Folienverschnitt mit allen seinen Komponenten hierfür eingesetzt und somit wiederverwertet werden. Hierdurch lässt sich die Wirtschaftlichkeit der erfindungsgemäßen Folie deutlich verbessern und eine Umweltbelastung reduzieren.

Die die Haftung verbessernde Schicht kann vorteilhaft in der Schmelze oder aber als Lösung, Suspension oder lösemittelhaltiger Klebstoff aufgebracht werden.

Ein weiterer Gegenstand der Erfindung ist ein Verfahren zum Herstellen einer Folie, dadurch gekennzeichnet, dass der Polymerblend in einem Extruder komprimiert und erwärmt, anschließend die Schmelze durch eine Flach- oder Runddüse extrudiert, gegebenenfalls auf einer Kühlwalze abgeschreckt wird, und die so erhaltene Folie auf einer oder mehreren Walzen bzw. Rollen abgezogen wird.

In einer bevorzugten Ausführungsform wird ein Verfahren zur Herstellung einer Mehrschichtfolie durch Coextrusion, durch Extrusionsbeschichtung oder durch Extrusionskaschierung beansprucht.

Die Folien gemäß der Erfindung können beispielsweise durch ein bekanntes Verfahren zur Herstellung einer Kunststoff-Mono- oder Mehrschichtfolien hergestellt werden, bei welchem die Polymerblends in einem Extruder komprimiert, erwärmt und anschließend die Schmelze oder die Schmelzen durch eine Flachdüse extrudiert werden und die so erhaltene Folie auf einer oder mehreren Walzen abgezogen wird.

Die gegebenenfalls zugesetzten Additive können bereits im Polymer bzw. im Polymerblend enthalten sein oder via Masterbatch-Technik zugegeben werden.

Die Schmelze/n können auch durch eine Ringdüse extrudiert werden, wobei die so erhaltene Folie auf einer Blasfolienanlage zur Folie verarbeitet und über Walzen flachgelegt wird.

Die Extrusionsversuche mit den erfindungsgemäßen Polymerblends haben auch gezeigt, dass sich die Solltemperaturen in Zylinder und Düsen von 230°C auf 210°C reduzieren lassen. Somit entsteht ein geringerer thermischer Stress bei der Herstellung extrudierter Folien. Auch auf diese Weise ist es möglich die Defektzahlen der Folien zu verringern. Gleichzeitig erhöht sich deren Transparenz.

Gegebenenfalls kann/können eine oder beide Oberfläche/n der Folie nach bekannten Methoden korona- oder flammbehandelt werden. Durch eine Behandlung der Oberfläche wird diese für eine nachfolgende Beschriftung oder Bedruckung nach allgemein bekannten Methoden vorbereitet.

Die erfindungsgemäßen Polymerblends können jedoch auch für die Herstellung von Formkörpern mittels Extrusions- oder Spritzblasverfahren eingesetzt werden. Auch hier vermindert sich durch den Einsatz der erfindungsgemäßen Polymerblends die Anzahl der Fehlstellen (Defektzahlen) auf dem Formkörper, sodass Anwendungen möglich werden, bei denen eine hervorragende Optik im Vordergrund steht. Möglich wird hierdurch beispielsweise die Herstellung von vorfüllbaren Spritzen und Ampullen im Medizinbereich.

Beim Extrusionblasverfahren wird in einer ersten Stufe eine blasfähiger Vorformling durch Extrusion hergestellt. In einer zweiten Stufe erfolgt das Blasformen mit anschließender Abkühlung des Formkörpers.

Im Unterschied zum Extrusionblasverfahren wird beim Spritzblasverfahren ein Vorformling spritzgegossen. Die zweite Stufe umfasst wiederum das Blasformen und Abkühlen des Formkörpers in der Blasform.

Gegenstand der Erfindung ist weiterhin die Verwendung der erfindungsgemäßen Polymerblends zur Herstellung von Folien.

Die erfindungsgemäßen Folien zeichnen sich durch deutlich reduzierte Defektzahlen aus, die durch den Einsatz der erfindungsgemäßen Polymerblends um mindestens 70 %, vorzugsweise mindestens 80% und insbesondere mindestens 90 % deutlich reduziert werden konnte.

Die erfindungsgemäßen Folien eröffnen durch ihre geringen Defektzahlen eine Vielzahl von Anwendungsmöglichkeiten wie Twist-wrap-Folien (z.B. Bonbon-Papier), Sleeves (Schrumpfverpackungen), Blisterverpackungen, Wursthüllen und Blasfolien. Es ist jedoch auch möglich Retardationsfilme oder Polarisationsfilme für optische Anwendungen z.B. für Flachbildschirme herzustellen.

In einer bevorzugten Ausführungsform wird deshalb die Verwendung des erfindungsgemäßen Polymerblends zur Herstellung von Twist-wrap-Folien beansprucht.

Vorzugsweise bestehen die Twist-wrap-Folien aus einer Deckschicht, hergestellt aus dem erfindungsgemäßen Polymerblend und einem Kern aus LLDPE, vorzugsweise mLLDPE.

Die Twist-wrap-Folien weisen insgesamt eine Dicke von 20-50 µm, vorzugsweise 25-35 µm auf.

Weiterhin bevorzugt ist die Verwendung der erfindungsgemäßen Polymerblends zur Herstellung von Retardationsfilmen und Polarisationsfilmen.

Ebenso bevorzugt ist die Verwendung der erfindungsgemäßen Polymerblends zur Herstellung von Formkörpern mittels Extrusion- oder Spritzblasverfahren.

### Beispiele

### Compoundierung in der Schmelze

Die Polymerblends der Vergleichsversuche V2 bis V6 und der erfindungsgemäßen Beispiele 7 bis 9 wurden aus Topas 8007® und dem jeweils angegebenem Polymer auf einem Leistritz LSM 34 UD 30 Doppelschneckenextruder bei 230°C Zylindertemperatur und 100 rpm Schneckendrehzahl und einem Ausstoß von 10 kg/h hergestellt. Der Schmelzestrang wurde in einem Wasserbad abgekühlt und mit einem Granulator Primo 60E von Rieter geschnitten.

### Mischen in Lösung

Für die Blends der erfindungsgemäßen Beispiele 10 bis 13 und Vergleichsversuch V14 und V15 wurde aus Norbornen und Ethylen in einem Rührkessel eine 10 %ige dekalinische Lösung eines Cycloolefin-Copolymers (z.B. Topas 8007®) mit einer Glasstufe von 80°C(DSC 20 K/min, second heat) und einem MVI (260°C, 2.16 kg) von 32 ml/10 min hergestellt. Für die Blends der erfindungsgemäßen Beispiele 19 bis 22 wurde aus Norbornen und Ethylen in einem Rührkessel eine 10 %ige dekalinische Lösung eines Cycloolefin-Copolymers (z.B. Topas 9506®) mit einer Glasstufe von 65°C (DSC 20 K/min, second heat) und einem MVI (260°C, 2.16 kg) von 20 ml/10 min hergestellt. In einem weiteren Rührkessel wird bei 100°C eine ca. 3 %ige Lösung des jeweils zugesetzten Polymers in Dekalin hergestellt.100 kg der COC-Lösung und die für die in Tabelle 1 angegebene Zusammensetzung notwendige Menge der Polymerlösung werden vermischt und das Lösungsmittel bei erhöhter Temperatur im Vakuum entfemt.
- Beispiel 10:: 8,33 kg einer 3.2 %igen-Lösung von Exceed 1018 CA
- Beispiel 11:: 8,33 kg einer 2.7 %igen Lösung von Dowlex NG 5066 E
- Beispiel 12:: 16,66 kg einer 3.0 %igen Lösung von Dowlex NG 5066 E
- Beispiel 13:: 33,3 kg einer 3.3 %igen Lösung von Dowlex NG 5066 E
- Vergleichsversuch V14:: 2 kg einer 2.8 %igen Lösung von Dowlex NG 5066 E
- Vergleichsversuch V15:: 8,33 kg einer 3.1 %igen Lösung von Hybrar 7125
- Beispiel 19:: 21,9 kg einer 3%igen-Lösung von Exceed 1018 CA
- Beispiel 20:: 21,2 kg einer 3%igen-Lösung von LL1004YB
- Beispiel 21:: 21,2 kg einer 3%igen-Lösung von Elite 5200G
- Beispiel 22:: 26,8 kg einer 3%igen-Lösung von Dowlex 3010

Die Polymerschmelze wird durch eine Düse zu einem Strang gegossen und granuliert.

### Salz und Pfeffer-Blend

Für die Vergleichsversuche V16 und V17 wurde ein Granulat-Gemisch aus Topas 8007® und Dowlex NG 5066E hergestellt.

### Spraycoating

Es wurde gemäß Beispiel 10 ein Polymerblend aus Topas 8007® und Exceed 1018 CA® hergestellt. Zusätzlich wurde in diesem Fall eine 25%igen Wachsdispersion auf das Granulat aufgesprüht, enthaltend Ethylenbisstearamid (LUBAprint®) und nachfolgend im trockenen Luftstrom auf Restfeuchten unter 200 ppm getrocknet (Beispiel 18).

### Herstellung der Folien aus den Polymerblends

Die Blends sowie nicht modifiziertes Topas 8007® wurden auf einem Collin Labor Einschneckenextruder (30 mm, L/D 30, 25D-Dreizonenschnecke mit Kompression 1:2 sowie 2,5D-Maddock-Scher- und 2,5D-Rauten-Mischteil) mit T-Düse und Chill-roll zu einer cast-Folie von 100 µm Stärke verarbeitet.

Die Solltemperaturen in Zylinder und Düsen betrugen 230°C, die Chill-roll-Temperatur betrug 80°C für die Beispiele 1 bis 18 und 70°C für die Beispiele 19 bis 22. Die Schneckendrehzahl betrug 40 U/min. Es wurde aus vollem Trichter extrudiert.

Die Defektzahlen wurden durch ein FS-5-System der Firma Optical Control Systems registriert und bestimmt. Hierbei wird die Zahl der Defekte von einem Kamerasystem in Kombination mit einer geeigneten Software bestimmt. So ist es möglich, Defektzahlen verschiedener Folien zu vergleichen.

Als Standard wurde eine Folie aus Topas 8007® ohne Zusatz von PE hergestellt. Die hierbei registrierten Defektzahlen wurden auf 100 % normiert (Vergleichsversuch 1).
Hybrar 7125® (Kuraray): Dichte 0,90 g/cm3 (ISO 1183), Schmelz-Massenfließrate MFR (230°C/2.16kg) 4 g/10min (ASTM D1238)
Moplen EP 300L® (Basell): Dichte 0,900 g/cm³ (ISO 1183), Schmelz-Massenfleißrate MFR (230°C/2.16 kg) 6.0 g/10min (ISO 1133), Schmelz-Volumenfließrate MVR-(230°C/2.16 kg) 8.00 cm³/10min (ISO 1133)
400R® (Dow Plastics): Dichte 0,925 g/cm³ (ASTM D-792), Schmelzindex (190°C/2.16 kg) 1.0 g/10min (ISO 1133)
Eltex A4009® : Dichte (23°C) 0,96 g/cm³ (ISO 11831A), Schmelzflußrate (2,16 kg) 0,9 g/10min (ISO1133)
Licowax 190 GR® (Clariant): Dichte (23°C) 0,95-0,97 g/cm3(ISO 1183)
Exceed 1018® (Exxon Mobil Chemical): Density 0,918 g/cm³ (ASTM D4703/D 4883), Schmelzindex 1.0 g/10min (ASTM D1238)
DOWLEX NG 5066E® (Dow Deutschland GmbH): Dichte 0,87 - 0,97 g/cm³
DOWLEX 3010® (Dow Plastics): Dichte 0,921 g/cm³ (ASTM D792), Schmelzindex 5,4 g/10min (ASTM D1238)
DOWLEX 2344E® (Dow Plastics): Dichte 0,933 g/cm³ (ISO 1183), Schmelzindex 0,7 g/10min (ISO 1133)
LL 1004YB® (Exxon Mobil Chemical): Dichte 0,918 g/cm³ (ASTM D47031 D1505), Schmelzindex 2,8 g/10min (ASTM D1238)
Elite 5200G® (Dow Plastics): Dichte 0,917 g/cm³ (ASTM D-792), Schmelzindex 4,00 g/10min (ASTM D-1238)

**Tabelle 1**

| | Herstellverfahren des Polymerblends | Cycloolefin-copolymer ® | Zugesetztes Polymer ® | Typ | Anteil zugesetztes Polymer % - bezogen auf Masse Polymerblend | Defektzahl in % bezogen auf V1 |
|---|---|---|---|---|---|---|
| V1 | - | Topas 8007 | - | - | 0 | 100 |
| V2 | Compoundierung in der Schmelze | Topas 8007 | Hybrar 7125 | hydriertes Styrol-Isopren-Blockcopolymer | 2,5 | 119 |
| V3 | Compoundierung in der Schmelze | Topas 8007 | Moplen EP 300L | heterophasisches PP-Copolymer | 2,5 | 102 |
| V4 | Compoundierung in der Schmelze | Topas 8007 | Dow 400R | LDPE | 2,5 | 83 |
| V5 | Compoundierung in der Schmelze | Topas 8007 | Eltex A4009 | HDPE | 2,5 | 124 |
| V6 | Compoundierung in der Schmelze | Topas 8007 | Licowax 190 GR | PE-Wachs | 2,5 | 143 |
| 7 | Compoundierung in der Schmelze | Topas 8007 | Exceed 1018 CA | mLLDPE | 2,5 | 3,4 |
| 8 | Compoundierung in der Schmelze | Topas 8007 | Dowlex NG 5066 E | LLDPE | 2,5 | 4,6 |
| 9 | Compoundierung in der Schmelze | Topas 8007 | Dowlex 2344 E | LLDPE | 2,5 | 7,0 |
| 10 | Mischen in Lösung | Topas 8007 | Exceed 1018 CA | mLLDPE | 2,5 | 0,5 |
| 11 | Mischen in Lösung | Topas 8007 | Dowlex NG 5066 E | LLDPE | 2 | 2,6 |
| 12 | Mischen in Lösung | Topas 8007 | Dowlex NG 5066 E | LLDPE | 5 | 0,5 |
| 13 | Mischen in Lösung | Topas 8007 | Dowlex NG 5066 E | LLDPE | 10 | 0,6 |
| V14 | Mischen in Lösung | Topas 8007 | Dowlex NG 5066 E | LLDPE | 0,6 | 29,8 |
| V15 | Mischen in Lösung | Topas 8007 | Hybrar 7125 | hydriertes Styrol-Isopren-Blockcopolymer | 2,5 | 19,3 |
| V16 | Salz + Pfeffer | Topas 8007 | Dowlex NG 5066 E | LLDPE | 2 | 88 |
| V17 | Salz + Peffer | Topas 8007 | Exceed 1018 CA | mLLDPE | 2,5 | 22,9 |
| 18 | Mischen in Lösung + Spraycoating | Topas 8007 | Exceed 1018 CA | mLLDPE | 2,5 | 0,3 |
| 19 | Mischen in Lösung | Topas 9506 | Exceed 1018 CA | mLLDPE | 6 | 0,2 |
| 20 | Mischen in Lösung | Topas 9506 | LL1004YB | LLDPE | 6 | 0,3 |
| 21 | Mischen in Lösung | Topas 9506 | Elite 5200G | mLLDPE | 6 | 0,2 |
| 22 | Mischen in Lösung | Topas 9506 | Dowlex 3010 | LLDPE | 7,5 | 1,4 |

Es wurde festgestellt, dass sich bei Zusatz von LLDPE eine deutliche Verbesserung des Verarbeitungsverhaltens ergibt, welches sich durch eine deutliche Reduktion der Defektzahlen der Folien belegen lässt (Beispiele 7 bis 13 und 19 bis 22).

Bei Polymeren wie z.B Styrol/Dien-copolymer (Hybrar 7125, Vergleichsversuch V15 und V2) oder auch andere Polyethylen-Typen, wie LDPE, HDPE, Polypropylen-Copolymer oder PE-Wachs wurde der Effekt nur wenig ausgeprägt oder gar nicht beobachtet (Vergleichsversuch V3 bis V6).

Ebenfalls wurde ein äquivalenter Anteil LLDPE mit Topas 8007® jedoch als Granulatgemisch (Salz und Pfeffer-Mischung) verarbeitet wurde. Dabei trat der Effekt nicht oder nur in sehr viel geringerem Maße auf (Vergleichsversuch V16 und V17).

Bei Gehalten an LLDPE, die außerhalb des erfindungsgemäßen Bereiches liegen, tritt der Effekt nur in sehr viel geringerem Maße auf (V14)

Weiterhin konnte festgestellt werden, dass sich die Defektzahlen nochmals reduzieren lassen, wenn die Polymerblends durch Mischung von COC und PE in Lösung hergestellt wurden (Beispiel 10 bis 13). Auch wurde die Defektzahl von nichterfindungsgemäßen Polymerblends aus COC mit Styrol/Dien-copolymer ebenfalls reduziert, wenn die Herstellung des Polymerblends durch Mischung in der Lösung erfolgt (Vergleichsversuch 15). Die Beispiele belegen eindrucksvoll, dass durch das Herstellverfahren der Polymerblends die Defektzahlen noch reduziert werden können.

Ebenso konnte festgestellt werden, dass aus mit Wachsdispersionen "spraygecoateten" Pellets oder Granulaten Folien hergestellt werden können, deren Defektzahlen nochmals reduziert sind (Beispiel 18).

## Patentansprüche

1. Polymerblend hergestellt durch Mischen in Lösung und enthaltend Cycloolefincopolymer COC und 1 bis 10 Gew.% Polyethylen LLDPE - bezogen auf die Masse des Polymerblends.

2. Polymerblend nach Anspruch 1, **dadurch gekennzeichnet, dass** als PE mLLDPE eingesetzt wird.

3. Polymerblend nach einem der Ansprüche 1 bis 2, **dadurch gekennzeichnet, dass** 2 bis 8, vorzugsweise 2,5 bis 5 Gew.% LLDPE - bezogen auf die Masse des Polymerblends - enthalten sind.

4. Polymerblend nach einem der Ansprüche 1 bis 3, **dadurch gekennzeichnet, dass** das COC 0,1 Gew.-% bis 100,0 Gew.-%, vorzugsweise 0,1 Gew.-% bis 99,9 Gew.%, bezogen auf die Gesamtmasse des COC's, polymerisierte Einheiten enthält, welche sich ableiten von mindestens einem polycyclischen Olefin der Formeln I, II, II', III, IV, V oder VI, 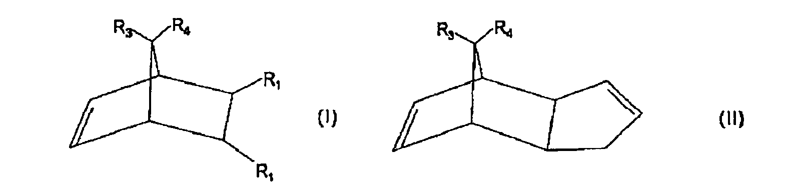 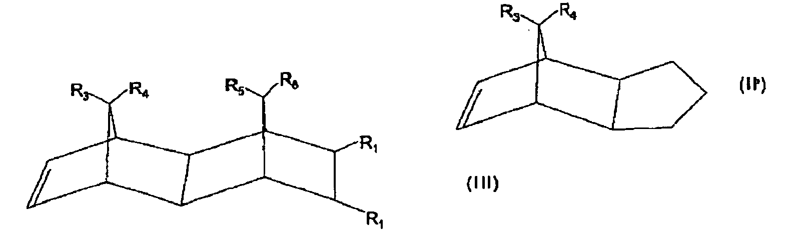 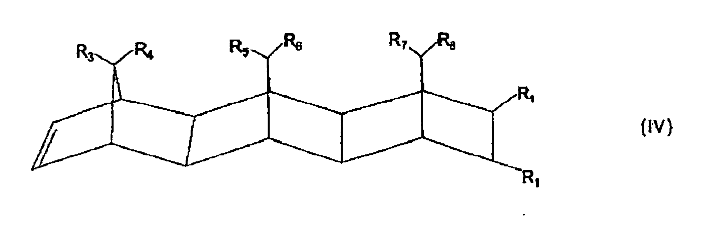 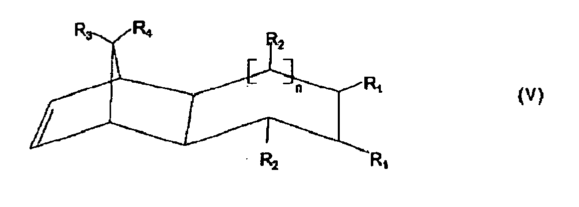 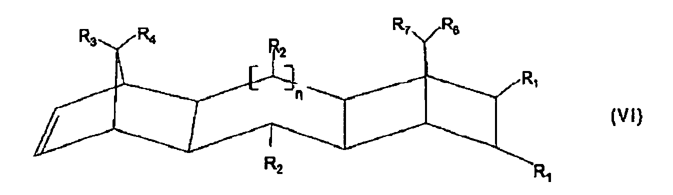 worin R¹, R², R³, R⁴, R⁵, R⁶, R⁷ und R⁸ gleich oder verschieden sind und ein
Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben, worin n Werte von 0 bis 5 darstellt,
und
0 bis 99,9 Gew.-%, vorzugsweise 0,1 bis 99,9 Gew.%, insbesondere 0,5 bis 80 Gew.-% bezogen auf die Gesamtmasse des Cycloolefincopolymers, polymerisierte Einheiten, welche sich ableiten von einem oder mehreren
acyclischen Olefinen der Formel VII 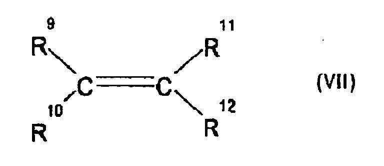 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest, wie einen C₁-C₈-Alkylrest oder einen C₆C₁₈-Arylrest bedeuten.

5. Polymerblend nach einem der Ansprüche 1 bis 4, **dadurch gekennzeichnet, dass** das COC eine Menge von 0 bis 45 Gew.-%, vorzugsweise 0,1 bis 40 Gew.-% bezogen auf seine Gesamtmasse, polymerisierte Einheiten enthält, die sich von einem oder mehreren monoolefinischen Olefinen der Formel VIII 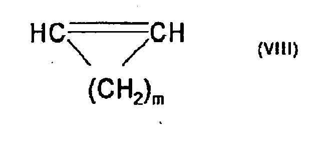 ableiten, worin m eine Zahl von 2 bis 10 ist.

6. Polymerblends nach einem der Ansprüche 1 bis 5, **dadurch gekennzeichnet, dass** dieser in Form von Polymerblend-Granulaten oder Pellets vorliegt, die durch Spraycoating mit einer Wachsschicht überzogen wurden.

7. Verfahren zur Herstellung des Polymerblends nach einem der Ansprüche 1 bis 6, **dadurch gekennzeichnet, dass** der Polymerblend durch Mischen in Lösung hergestellt wurde.

8. Verfahren nach Anspruch 7, **dadurch gekennzeichnet, dass** die Polymerblend-Granulate oder Pellets durch Spraycoating mit einer Wachsschicht überzogen wurden.

9. Verfahren zur Herstellung des Polymerblends nach Anspruch 8, **dadurch gekennzeichnet, dass** das Wachs ausgewählt ist aus der Gruppe, die gebildet wird von Ethylenbisstearamid und Pentaerythrit-tetrastearat.

10. Formkörper hergestellt mittels Extrusions- oder Spritzblasverfahren enthaltend Polymerblends nach einem der Ansprüche 1 bis 6.

11. Mono- oder Mehrschichtfolien, enthaltend Polymerblends nach einem der Ansprüche 1 bis 6.

12. Mono- oder Mehrschichtfolien nach Anspruch 11, **dadurch gekennzeichnet, dass** die Defektzahl der Folie um mindestens 70 %, vorzugsweise mindestens 80 % und insbesondere um mindestens 90 % reduziert ist, wobei sich die Reduktion durch Vergleich der Defektzahl mit einer Folie aus dem entsprechenden COC ohne PE ergibt.

13. Verfahren zum Herstellen einer Folie nach Anspruch 11 oder 12, **dadurch gekennzeichnet, dass** der Polymerblend nach einem der Ansprüche 1 bis 6 in einem Extruder komprimiert und erwärmt, anschließend die Schmelze durch eine Flach- oder Runddüse extrudiert, gegebenenfalls auf einer Kühlwalze abgeschreckt wird, und die so erhaltene Folie auf einer oder mehreren Walzen bzw. Rollen abgezogen wird.

14. Verfahren nach Anspruch 13, **dadurch gekennzeichnet, dass** durch Coextrusion oder durch Extrusionsbeschichtung oder durch Extrusionskaschierung eine Mehrschichtfolle hergestellt wird.

15. Verwendung von Polymerblends nach einem der Ansprüche 1 bis 6 zur Herstellung von Folien.

16. Verwendung der Polymerblends nach einem der Ansprüche 1 bis 6 zur Herstellung von Twist-Wrap Folien.

17. Verwendung der Polymerblends nach einem der Ansprüche 1 bis 6 zur Herstellung von Retardationsfilmen und Polarisationsfilmen.

18. Verwendung der Polymerblends nach einem der Ansprüche 1 bis 6 zur Herstellung von Formkörpern mittels Extrusion- oder Spritzblasverfahren.

## Claims

1. A polymer blend prepared via mixing in solution and comprising cycloolefin copolymer COC and from 1 to 10% by weight of LLDPE polyethylene - based on the weight of the polymer blend.

2. The polymer blend as claimed in claim 1, wherein mLLDPE is used as PE.

3. The polymer blend as claimed in any of claims 1 to 2, wherein the amount of LLDPE present is from 2 to 8% by weight, preferably from 2.5 to 5% by weight - based on the weight of the polymer blend.

4. The polymer blend as claimed in any of claims 1 to 3, wherein the COC contains, based on the total weight of the COC, from 0.1 % by weight to 100.0% by weight, preferably from 0.1% by weight to 99.9% by weight, of polymerized units which derive from at least one polycyclic olefin of the formula I, II, II', III, IV, V or VI 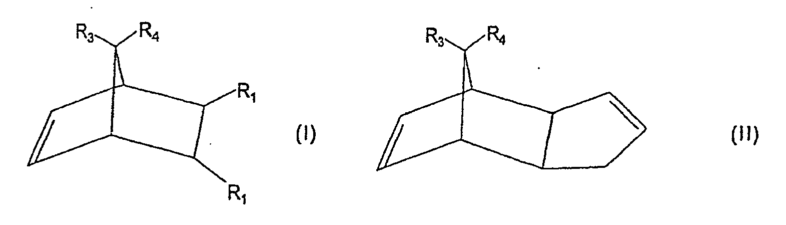 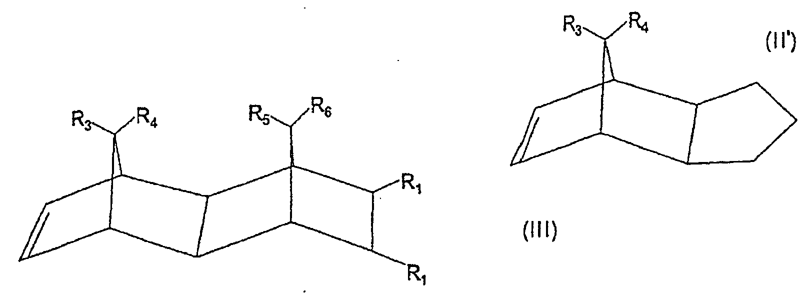 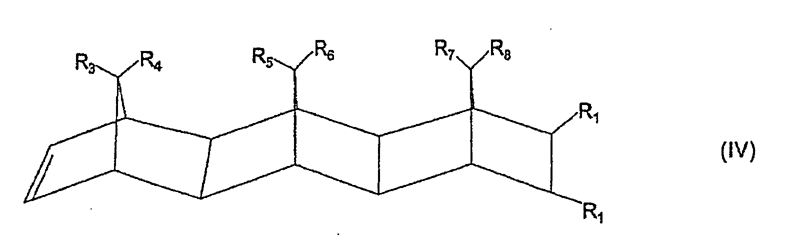 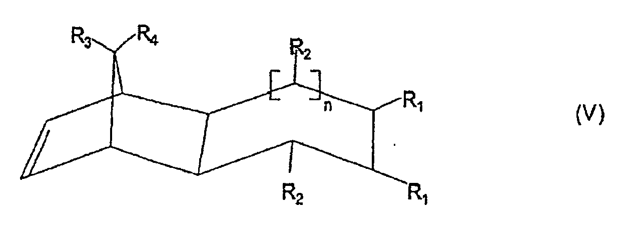 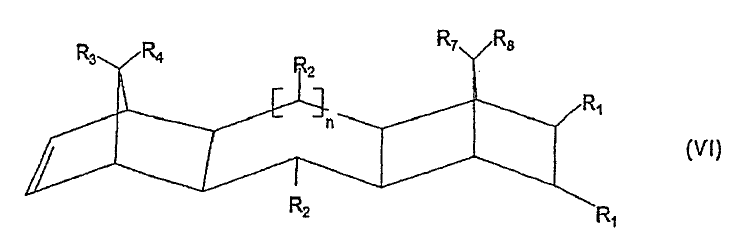 in which R¹, R², R³, R⁴, R⁵, R⁶, R⁷ and R⁸ are identical or different and are a hydrogen atom or a C₁-C₂₀-hydrocarbon radical, such as a linear or branched C₁-C₈-alkyl radical, C₆-C₁₈-aryl radical, C₇-C₂₀-alkylenearyl radical, or a cyclic or acyclic C₂-C₂₀-alkenyl radical, or form a saturated, unsaturated or aromatic ring, where identical radicals R¹ to R⁸ in the various formulae I to VI have a different meaning, and in which n is values from 0 to 5,
and
from 0 to 99.9% by weight, preferably from 0.1 to 99.9% by weight, in particular from 0.5 to 80% by weight, based on the total weight of the cycloolefin copolymer, of polymerized units which derive from one or more acyclic olefins of the formula VII 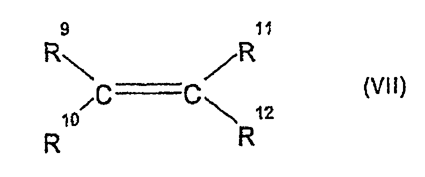 in which R⁹, R¹⁰, R¹¹ and R¹² are identical or different and are a hydrogen atom or a linear, branched, saturated or unsaturated C₁-C₂₀-hydrocarbon radical, such as a C₁-C₈-alkyl radical or a C₆-C₁₈-aryl radical.

5. The polymer blend as claimed in any of claims 1 to 4, wherein the COC contains, based on its total weight, an amount of from 0 to 45% by weight, preferably from 0.1 to 40% by weight, of polymerized units which derive from one or more monoolefins of the formula VIII 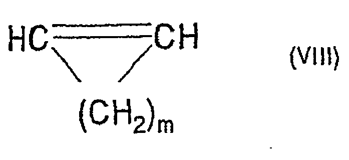 in which m is a number from 2 to 10.

6. The polymer blend as claimed in any of claims 1 to 5, wherein this takes the form of polymer blend granules or pellets which have been coated with a wax layer via spray coating.

7. A process for preparation of the polymer blend as claimed in any of claims 1 to 6, wherein the polymer blend has been prepared via mixing in solution.

8. The process as claimed in claim 7, wherein the polymer blend granules or pellets have been coated with a wax layer via spray coating.

9. A process for preparation of the polymer blend as claimed in claim 8, wherein the wax has been selected from the group formed by ethylenebisstearamide and pentaerythritol tetrastearate.

10. A molding produced by means of extrusion blow molding processes or injection blow molding processes comprising polymer blends as claimed in any of claims 1 to 6.

11. A mono- or multilayer foil, comprising polymer blends as claimed in any of claims 1 to 6.

12. The mono- or multilayer foil as claimed in claim 11, wherein the defect number of the foil has been reduced by at least 70%, preferably by at least 80% and in particular by at least 90%, where the reduction is obtained from comparison of the defect number with a foil composed of the corresponding COC without PE.

13. A process for production of a foil as claimed in claim 11 or 12, wherein the polymer blend as claimed in any of claims 1 to 6 is compressed and heated in an extruder, then the melt is extruded through a flat-film die or annular die and, if appropriate, quenched on a chill roll, and the resultant foil is drawn off on one or more rolls or rollers.

14. The process as claimed in claim 13, wherein a multilayer foil is produced via coextrusion or via extrusion coating or via extrusion lamination.

15. The use of polymer blends as claimed in any of claims 1 to 6 for production of foils.

16. The use of the polymer blends as claimed in any of claims 1 to 6 for production of twist-wrap foils.

17. The use of the polymer blends as claimed in any of claims 1 to 6 for production of retardation films and of polarization films.

18. The use of the polymer blends as claimed in any of claims 1 to 6 for production of moldings by means of extrusion blow molding processes or injection blow molding processes.

## Revendications

1. Mélange de polymères, fabriqué par mélangeage en solution et contenant un copolymère cyclooléfinique COC et de 1 à 10% en poids, rapportés à la masse du mélange de polymères, de polyéthylène LLDPE.

2. Mélange de polymères selon la revendication 1, **caractérisé en ce que** l'on utilise comme PE du mLLDPE.

3. Mélange de polymères selon l'une quelconque des revendications 1 ou 2, **caractérisé en ce qu'**il contient de 2 à 8, de préférence de 2,5 à 5% en poids de LLDPE, rapportés à la masse du mélange de polymères.

4. Mélange de polymères selon l'une quelconque des revendications 1 à 3, **caractérisé en ce que** le COC contient de 0,1% en poids à 100,0% en poids, de préférence de 0,1 % en poids à 99,9% en poids, rapportés à la masse totale du COC, d'unités polymérisées, lesquelles dérivent d'au moins une oléfine polycyclique de formules I, II, III, IV, V ou VI, 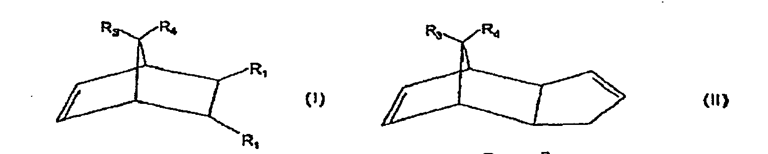 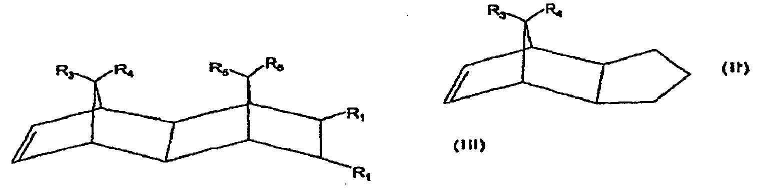 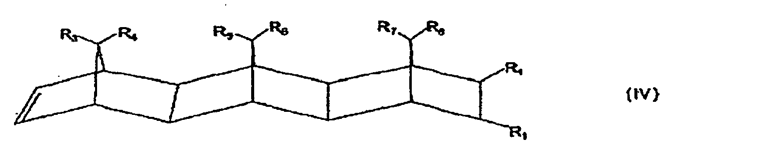 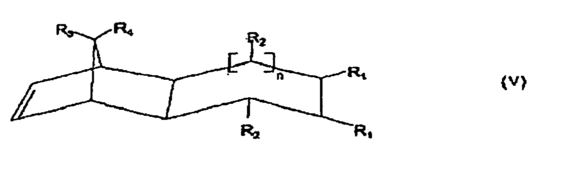 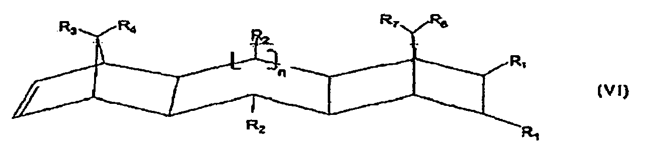 dans lesquelles formules R¹, R², R³, R⁴, R⁵, R⁶, R⁷ et R⁸ sont identiques ou différents et correspondent à un atome d'hydrogène ou un radical hydrocarboné en C₁ à C₂₀, tel un radical alkyle linéaire ou ramifié en C₁ à C₈, un radical aryle en C₆ à C₁₈, un radical alkylène-aryle en C₇ à C₂₀, ou un radical alcényle cyclique ou acyclique en C₂ à C₂₀, ou forment un cycle saturé, insaturé ou aromatique, dans lequel des radicaux identiques R¹ à R⁸ ont une signification différente dans les différentes formules I à VI, dans lesquelles n représente des valeurs de 0 à 5,
et
0 à 99,9% en poids, de préférence 0,1 à 99,9% en poids, en particulier 0,5 à 80% en poids, rapportés à la masse totale du copolymère cyclooléfinique, d'unités polymérisées qui dérivent d'une ou de plusieurs oléfines acycliques de formule VII 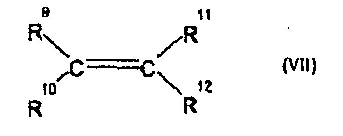 dans laquelle R⁹, R¹⁰ R¹¹ et R¹² sont identiques ou différents et correspondent à un atome d'hydrogène, un radical hydrocarboné en C₁ à C₂₀ linéaire, ramifié, saturé ou insaturé, tel un radical alkyle en C₁ à C₈ ou un radical aryle en C₆ à C₁₈.

5. Mélange de polymères selon l'une quelconque des revendications 1 à 4, **caractérisé en ce que** le COC contient une quantité de 0 à 45% en poids, de préférence de 0,1 à 40% en poids, rapportés à sa masse totale, d'unités polymérisées qui dérivent d'une ou de plusieurs oléfines mono-oléfiniques de formule VIII 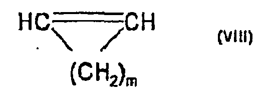 dans laquelle m est un nombre de 2 à 10.

6. Mélange de polymères selon l'une quelconque des revendications 1 à 5, **caractérisé en ce que** celui-ci se présente sous forme de granulés ou de pellets dudit mélange de polymères, qui ont été revêtus d'une couche de cire par un procédé de revêtement par pulvérisation.

7. Procédé de préparation du mélange de polymères selon l'une quelconque des revendications 1 à 6, **caractérisé en ce que** le mélange de polymères a été préparé par mélangeage en solution.

8. Procédé selon la revendication 7, **caractérisé en ce que** les granulés ou les pellets du mélange de polymères ont été revêtus d'une couche de cire par un procédé de revêtement par pulvérisation.

9. Procédé selon la revendication 8, **caractérisé en ce que** la cire est choisie dans le groupe comprenant l'éthylène bis-stéaramide et du tétrastéarate de pentaérythritol.

10. Article moulé, fabriqué au moyen de procédés d'extrusion ou d'injection-soufflage, faisant emploi de mélanges de polymères selon l'une quelconque des revendications 1 à 6.

11. Films mono- et multicouche, contenant des mélanges de polymères selon l'une quelconque des revendications 1 à 6.

12. Films mono- et multicouche selon la revendication 11, **caractérisés en ce que** le nombre de défauts du film est réduit d'au moins 70%, de préférence d'au moins 80% et en particulier d'au moins 90%, la réduction se révélant par comparaison du nombre de défauts avec un film en le COC correspondant sans PE.

13. Procédé de fabrication d'un film selon la revendication 11 ou 12, **caractérisé en ce que** le mélange de polymères selon l'une quelconque des revendications 1 à 6 est comprimé et réchauffé dans une extrudeuse, **en ce que** la matière fondue est ensuite extrudée à travers une filière plate ou ronde, **en ce qu'**elle est refroidie rapidement sur un rouleau de refroidissement, et **en ce que** le film ainsi obtenu est débité sur un ou plusieurs rouleaux ou cylindres.

14. Procédé selon la revendication 13, **caractérisé en ce qu'**un film multicouche est fabriqué par coextrusion ou par revêtement lors de l'extrusion, ou par doublage lors de l'extrusion.

15. Utilisation de mélanges de polymères selon l'une quelconque des revendications 1 à 6 pour la fabrication de films.

16. Utilisation de mélanges de polymères selon l'une quelconque des revendications 1 à 6 pour la fabrication de films pour enveloppe de torsion (twist-wrap).

17. Utilisation de mélanges de polymères selon l'une quelconque des revendications 1 à 6 pour la fabrication de films à retard et de films polarisants.

18. Utilisation de mélanges de polymères selon l'une quelconque des revendications 1 à 6 pour la fabrication de corps moulés par des procédés d'extrusion ou d'injection-soufflage.
